(19) Europäisches Patentamt / European Patent Office / Office européen des brevets

(11) **EP 2 479 681 A1**

(12) **EUROPEAN PATENT APPLICATION**

(43) Date of publication:
**25.07.2012 Bulletin 2012/30**

(51) Int Cl.:
*G06F 17/17* [(2006.01)]     *G01F 1/696* [(2006.01)]

(21) Application number: **11000527.9**

(22) Date of filing: **24.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Sensirion AG**
**8712 Stäfa (CH)**

(72) Inventor: **Steiner-Vanha, Ralph**
**8634 Hombrechtikon (CH)**

(74) Representative: **Toleti, Martin et al**
**c/o E.Blum & Co. AG**
**Vorderberg 11**
**8044 Zürich (CH)**

(54) **Approximating a non-linear characteristic in a sensor system**

(57)     A method is disclosed for determining an output value ($S^m_n$) in response to an input value ($x=S$) which output value ($S^m_n$) represents an approximation to a value of a characteristic ($Q(x)$). A range of input values ($x$) is divided into intervals each interval comprising a set of interval values ($x_i$) representing possible discrete input values ($x$) in such interval. In response to receiving the input value ($S$) an interval ($n$) associated with the received input value ($x$) is identified. The received input value ($S$) is mapped into an input interval value ($s$. A set of coefficients ($C^m_d$) is determined for the identified interval ($n$) based on a set of constants ($c_{n+/-k}$) selected from a multitude of constants each constant ($C_{n+/-k}$) being assigned to one of the intervals and representing a constant value for being integrated m times resulting in a base spline ($B^m$) of degree m, an approximation to the characteristic ($Q(x)$) being formed by accumulating all the base splines ($B^m$) into a spline ($S^m$) of degree m, and the determined set of coefficients ($C^m_d$) forming a polynomial in combination with the interval value ($x_i$) as a variable of degree m and less which polynomial represents the spline ($S^m$) in the identified interval ($n$). For each expression of the input interval value ($s$) to the power of d or less in the polynomial an interim value ($B^d_s$) for a lower interval value and/or a lower degree is determined. The output value ($S^m_n$) is determined based on the interim values ($B^d_s$) and the coefficients ($C^m_n$).

FIG. 13

EP 2 479 681 A1

**Description**

Technical Field

The present invention relates to a method for determining an output value in response to an input value supplied by a sensor which output value represents an approximation to a value of a characteristic. The invention further relates to an associated computer program element and to an approximation unit.

Background Art

In many sensor systems the actual sensor shows a non-linear characteristic implying that the relationship between the measure and the signal output of the sensor is non-linear. In order to achieve e.g. a linear relationship between measurand and an output signal, the sensor output may be input to the inverse function of the sensor characteristic. Moreover, such inverse mapping function can be of any form in order to achieve any arbitrary output signal relationship with respect to the measurand.

Disclosure of the Invention

The problem to be solved by the present invention is therefore to provide a way of representing an arbitrary mapping function by a corresponding approximation of the function which is especially suited for being implemented in the digital domain in hardware logic.

This problem is solved by a method for determining an output value in response to an input value supplied by a sensor which output value represents an approximation to a value of a characteristic according to the features of claim 1. A range of input values is divided into intervals, wherein each interval comprises a set of interval values representing possible discrete input values in and related to such interval. For example, an interval value may always be related to the beginning of the interval. An interval value may or may not be normalized with respect to a width of the interval. In response to receiving the input value an interval associated with the received input value is identified. A set of coefficients is determined for the identified interval based on a set of constants selected from a multitude of constants each constant being assigned to one of the intervals and representing a constant value for being integrated m times resulting in a base spline of degree m wherein an approximation to the characteristic is formed by accumulating all the base splines into a spline of degree m. The determined coefficients form a polynomial together with the interval value as a variable of degree m and less which polynomial represents the spline in the identified interval. The received input value is mapped to an interval value of the identified interval which interval value is denoted as input interval value. For each expression of the input interval value to the power of m or less in the polynomial an interim value is determined based on an interim value determined for a lower interval value and/or a lower degree. The output value is determined based on the interim values and the coefficients. The lower interval value may inlcude an interval value lower than the input interval value. The lower degree may include a degree lower than the degree associated with the interim value currently calculated.

A spline is defined as a piecewise polynomial function. In the present context, an interval defines a piece of a spline. The present approach makes use of identifying the interval the input value falls in and by mapping and preferably normalizing the received input value with respect to the identified interval into what is called an input interval value. For the input interval value in the identified interval, a spline value is determined as output value, preferably realized by means of counters only. Summarizing, in such mapping of an input value supplied by a sensor to an output value, the mapping function may represent an approximation to an arbitrary characteristic.

According to another aspect of the present invention, a computer program element is provided comprising computer program code means for implementing a method according to any one of the above embodiments when being executed on a processing unit.

According to another aspect of the present invention an approximation unit is provided for determining an output value in response to an input value supplied by a sensor which output value represents an approximation to a value of a characteristic. The approximation unit comprises an interval identifier for identifying an interval out of several intervals into which a range of input values is divided, the identified interval being the interval the received input value is associated with. An input value mapper is provided for mapping the received input value into an interval value, wherein each interval comprises a set of interval values representing possible discrete input values in and relative to such interval. The mapped input value also is denoted as input interval value. A coefficient calculator is provided for determining a set of coefficients for the identified interval based on a set constants selected from a multitude of constants each constant being assigned to one of the intervals and representing a constant value for being integrated m times resulting in a base spline of degree m, an approximation to the characteristic being formed by accumulating all the base splines into a spline of degree m. The determined coefficients form a polynomial together with the interval value as a variable of degree m and less which polynomial represents the spline in the identified interval. An accumulation unit is provided adapted for determining for each expression of the input interval value to the power m or less an interim value based on an interim value determined for a lower interval value and/or a lower degree. The accumulation unit further is adapted for determining the output value based on the interim values and the coefficients.

Other advantageous embodiments are listed in the dependent claims as well as in the description below.

Any described embodiments similarly pertain to the method, the apparatus, and the computer program element. Synergetic effects may arise from different combinations of the embodiments although they might not be described in detail.

Further on it shall be noted that all embodiments of the present invention concerning a method might be carried out in the order of the steps as described or in any other order. The disclosure and scope of the invention shall include any order of steps irrespective of the order listed in the claims.

Brief Description of the Drawings

The aspects defined above and further aspects, features and advantages of the present invention can also be derived from the examples of embodiments to be described hereinafter. Such examples of embodiments are explained with reference to the annexed drawings, wherein the figures show:

Fig. 1 a sample characteristic of a flow sensor,
Fig. 2 a sample characteristic of a linearizer,
Fig. 3 a block diagram of components of a sensor system according to an embodiment of the present invention,
Fig. 4 a diagram illustrating a characteristic and a first order approximation to such characteristic,
Fig. 5 a diagram illustrating the building of base spline portions of different degree limited to a single interval,
Fig. 6 a diagram illustrating the building of two differently weighted base spline portions of different degree limited to a single interval,
Fig. 7 a diagram illustrating the building of complete base splines of different degrees,
Fig. 8 a diagram illustrating a sample characteristic and underlying base splines for building a spline approximating the sample characteristic,
Fig. 9 a diagram illustrating, for a single interval, base spline portions of different degrees, the base spline portions of the same degree to be accumulated for building a spline for such interval,
Fig. 10 a table illustrating the building of interim values in two different ways, according to embodiments of the present invention,
FIG. 11 a flow chart illustrating a method according to an embodiment of the present invention,
FIG. 12 a block diagram of an approximation unit according to an embodiment of the present invention,
FIG. 13 a block diagram of an accumulation unit as used in an approximation unit according to an embodiment of the present invention, and
Fig. 14 a table illustrating the building of interim values according to embodiments of the present invention.

Modes for Carrying Out the Invention

In the figures, like or similar elements are referred to by the same reference numerals across all figures.

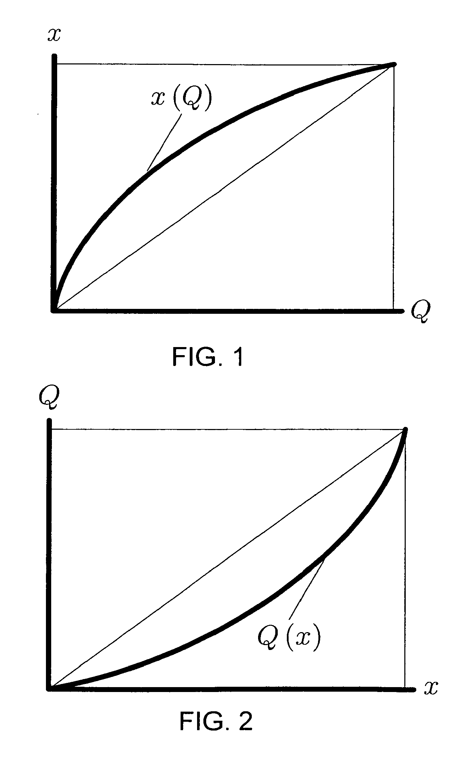

The diagram in Figure 1 illustrates a sample sensor characteristic x(Q) of a sensor. Q denotes the physical measure to be measured, and x(Q) denotes corresponding values at the sensor output, e.g. in form of electrical voltages. It can be derived from Figure 1 that the sensor characteristic x(Q) is of non-linear nature.

The sensor outputs a sensor signal x(t) over time t with sensor values x. In order to allow for a more easy subsequent processing the sensor signal x(t) as provided by the sensor preferably shall be linearized. Linearization in the present context is understood as a way of replacing the non-linear characteristic x(Q) of the sensor by a linear characteristic of a system including the sensor and a linearizer arranged in series. For this reason, the sensor output x(Q) is connected to an input of the linearizer. A sample characteristic Q(x) of the linearizer is illustrated in Figure 2. In this embodiment, the non-linear characteristic Q(x) of the linearizer is the inverse of the non-linear characteristic of the sensor, i.e. $Q(x) = x^{-1}(Q)$. As a result, a total characteristic of such system comprising the sensor and the linearizer is linear in a sense that signal values x' at the-output of the linearizer correspond in a linear fashion to the physical measure Q, for example according to x'=b*Q with slope b being a constant and provided the sensor characteristic provides a sensor output x=0 for the physical measure Q=0.

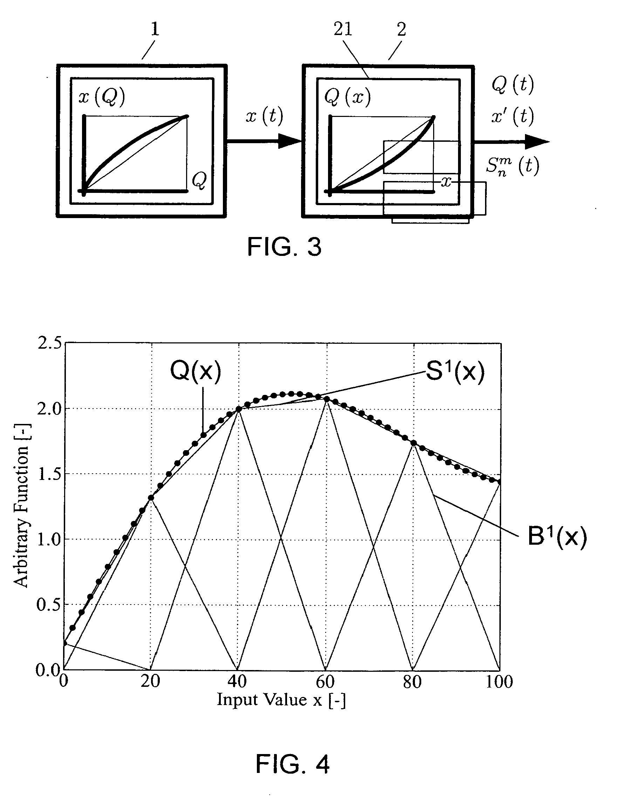

In the block diagram of Figure 3 a sensor 1 and a linearizer 2 are illustrated. Corresponding characteristics and output signals are shown in the respective blocks. The linearizer 2 comprises an approximation unit 21.

The sensor signal x(t) over time t may be supplied by the sensor 1 in form of a digital signal, or be converted into a digital signal prior to being supplied to the linearizer 2. In case of an analog-digital conversion of the sensor signal x(t) prior to linearization, the sensor output values x are advantageously provided to the linearizer 2 in digital form at a rate of a sampling frequency of the analog/digital converter. As a result, the digital sensor signal x(t) over time t is input to the linearizer 2. By translating the sensor output values x into values Q of the physical measure according to the linearizer characteristic Q(x) a linearized sensor signal Q(t)= x'(t) may be formed in digital form at the output of the linearizer 2. This linearized sensor signal Q(t) represents a digital linearized signal over time t based on the sensor signal x(t) and is ideal in that the characteristic (Q(x)) of the linearizer represents an ideal inverse of the sensor characteristic x(Q). Consequently, the linearizer 2 transforms the sensor signal x(t) into a linearized sensor signal Q(t) over time t of linear property with respect to the physical measure Q.

Previous implementations of the linearizer 2 have provided a look-up table for the characteristic Q(x) of the linearizer 2 for assigning an output value Q to an input value x. Instead of providing such look-up table, an approximation to the characteristic Q(x) of the linearizer 2 by means of the approximation unit 21 is introduced as an advantageous embodiment of the present invention. Hence, the output signal of the linearizer 2 which is the output of the approximation unit 21 no longer is the ideal linearized sensor signal Q(t) but is an approximated linearized sensor signal $S^m_n(t)$.

In Figure 4, a characteristic Q(x) may represent a sample characteristic of a linearizer 2 as used in Figure 3. The sample characteristic Q(x) is of non-linear nature. Such characteristic Q(x) may be piecewise approximated by straight lines between nodes of the characteristic Q(x). Such piecewise linear approximation is denoted as $S^1(x)$ in the diagram of Figure 4.

Such approximation represents a piecewise first order interpolation. For such purpose, the range of input values x is divided into intervals of equal or variable length, and the characteristic values Q(x) at the boundaries of the intervals - also known as nodes - are stored in memory. In the present example, the nodes are arranged at input values of x=p*20 with p being a positive integer. In between the nodes the characteristic Q(x) is interpolated by a linear function.

The linear function in an interval between each pair of nodes can be determined in various ways. In one embodiment, the linear function may be approximated by a linear combination of hat-shaped base functions as shown in Figure 4. Such base function is also called linear base spline or linear B-spline $B^1(x)$.

A spline generally is understood as a function defined piecewise by polynomials with different coefficients per piece/interval.

In the present example, each base spline $B^1(x)$ is of linear character for the reason that its portions do not show any other dependency from the in input value x than a linear dependency. Each linear base spline $B^1(x)$ as shown in Figure 4 is associated with a node, and the peak of the base spline $B^1(x)$ coincides with the associated node. Consequently, the peak value of a base spline $B^1(x)$ is equal to the value of the characteristic Q(x) at the associated node. Taking this from a different perspective, a uniform linear base spline $B^1(x)$ with a peak value of one is weighted by a constant c equal to the value the characteristic Q(x) takes at the associated node. In this respect, a constant base spline $B^1(x)$ may be represented by such value c being constant for the entire interval which interval is determined by/ starting at the associated node.

In the present example, the linear base spline assigned to an interval may be derived from the constant base spline assigned to such interval by means of integration. The constant base spline may be defined by the constant value $C_n$ for the interval n and by the value zero elsewhere. As a result, the corresponding linear base spline comprises a rising portion and a falling portion building the shape of a hat. For the reason, that to each interval a constant base spline can be assigned and a linear base spline can be derived from the constant base spline by means of integration not limited to the interval, a linear base spline extends over two intervals. As a result, in any given interval there are always two base splines portions involved, i.e. a falling portion of the linear base spline associated with the present interval, and a rising portion of the linear base spline associated with the subsequent interval. The approximate linear function in between the nodes is determined by accumulating / summing up the values of such linear base spline portions residing in such interval.

However, as can be derived from the diagram in Figure 4, and subject to the application, the approximate linear spline function $S^1(x)$ based on base splines $B^1(x)$ of first order may deviate from the ideal characteristic Q(x) and may in particular deviate in the middle between two nodes. Therefore, the approximation results may be improved by means of involving base splines of an order higher than the first order, such as quadratic base splines, or cubic base splines.

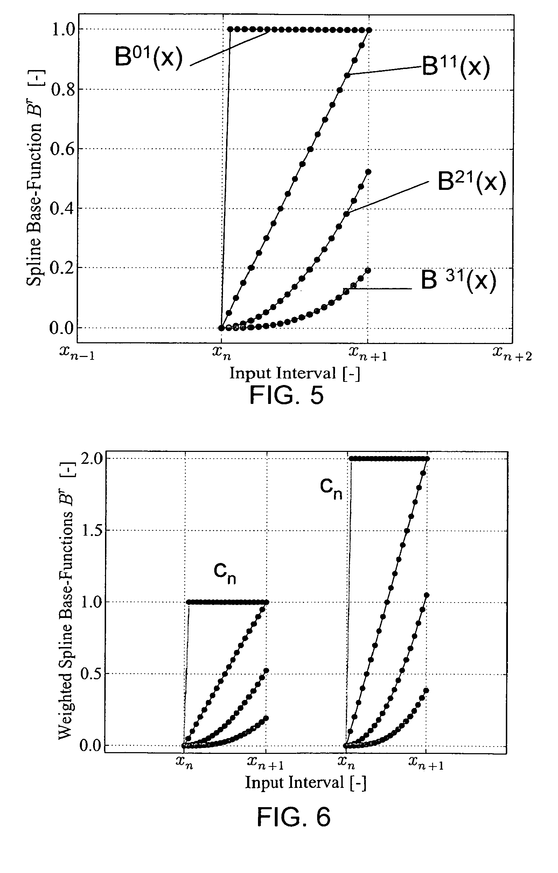

In the diagram of Figure 5, the creation of higher order base spline portions is introduced. The range of input values x is split into intervals of equal width. The creation of higher order base spline portions is explained in connection with an interval denoted as interval n being confined by an entry node $x=x_n$ and an exit node $x_{n+1}$ simultaneously representing the entry node of the subsequent interval n+1. A notation $B^{mh}$ is used for such base spline portions in which m denotes the degree of the base spline and h denotes the portion of the base spline. For the reason that in Figure 5 the view is limited to a single interval n, it is only the first portion h=1 of each base spline $B^{m1}$ being shown, while the complete base spline $B^m$ may comprise additional portions h=2, 3, .. residing in adjacent intervals. In the interval n, the rising portion of the linear base spline is denoted as $B^{11}(x)$. As can be derived from this Figure, the linear base spline portion $B^{11}(x)$ as depicted can be built from integrating a constant base spline portion $B^{01}(x)$ which constant base spline portion $B^{01}(x)$ is of constant value of 1.0 in the present interval n, and by the value of 0.0 anywhere else.

From the linear base spline portion $B^{11}(x)$ depicted in Figure 5, a quadratic base spline portion $B^{21}(x)$ is built

by means of integrating the linear base spline portion $B^{11}(x)$ in interval n. In the same manner, a cubic base spline portion $B^{31}(x)$ is built by integrating the quadratic base spline portion $B^{21}(x)$ in interval n.

As can be derived from Figure 5, any base spline $B^m(x)$ of order m>0 can be generated by successive integration of a constant base spline $B^0(x)$ of constant value $C_n$. For modifying the magnitude of any higher order base spline $B^m(x)$ it is only the constant value $C_n$ of the constant base spline $B^0(x)$ that needs to be adapted. In Figure 6, two sets of higher order base spline portions $B^{mh}(x)$ in interval n are illustrated which are based on the two different constant base splines $B^{01}(x)$ of constant values $C_n=1.0$ and $C_n=2.0$.

As can be derived from the above, an important property of a normalized base spline $B^m$ of order m is that it can be defined recursively by

$$B^{m+1}(x) \equiv \int_{x-\frac{1}{2}}^{x+\frac{1}{2}} B^m(t)dt , \quad x \in \mathbf{R} , \quad m = 0, 1, \ldots \qquad \texttt{equation I)}$$

Such integral represents a moving average operation over the given interval. However, for determining a moving average it requires a large count of memory. Since for each value added to the sum, another value has to be subtracted, it is necessary to know all the summands over the entire summing range. This means that when moving all the base spline portions into the first interval the moving average adds for each step a new value and subtracts a value which is identically zero. This in turn means that the overall spline $S^m$ can be understood as a linear combination of base splines $B^m$ in the first interval weighted by different coefficients C. Since in a digital system signals are quantized, the integral can be replaced by a sum function, which makes the recursive definition of the base function very easy. So, the moving average operation simplifies to a sum function, which can easily be implemented in logic.

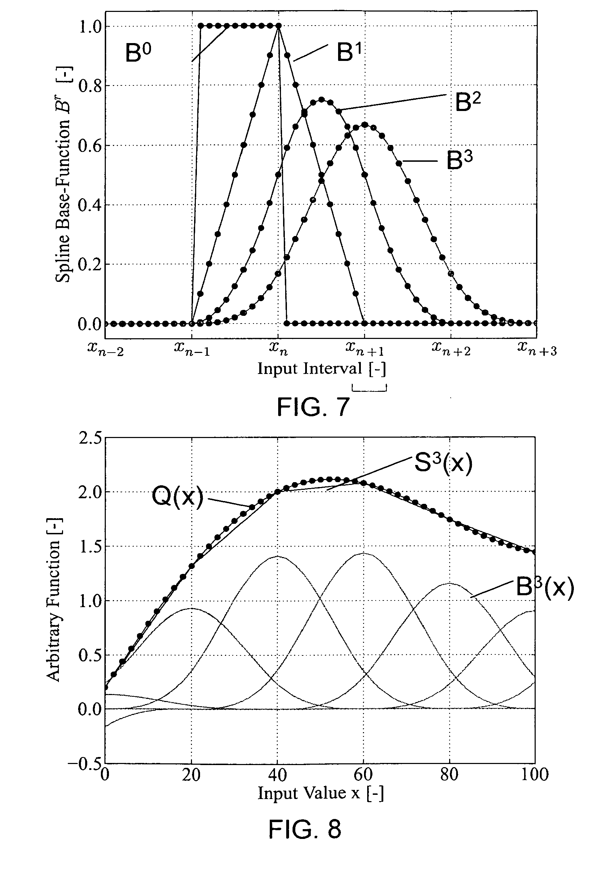

For a continued illustration, it is referred to Figure 7, in which the generation of base splines as illustrated in Figure 5 no longer is limited to a single interval but is allowed across multiple intervals. In the present diagram, the base splines $B^m$ are depicted over intervals n=0,1,2, 3 and 4. Again, the starting point is a constant base spline $B^0$ of constant value $C_0=1.0$ in the first interval n=0 and of value 0.0 outside the interval n. The constant base spline $B^0$ is integrated over intervals n=0 and n=1 and results in a rising portion of the linear base spline $B^1$ in interval n=0, followed by a falling portion in the interval n=1. In a next iteration, the linear base spline $B^1$ is integrated over intervals n=0,1,2 and results in a quadratic base spline $B^2$ extending over these three intervals n=0,1,2. And finally, a cubic base spline $B^3$ is built by integrating the quadratic base spline $B^2$ over intervals n=0,1,2,3.

The base splines $B^m$ of various orders m as presented in Figure 7 can mathematically be described by the expressions as listed in the following Table I) when normalizing the range of input values x relative to the width $\Delta x$ of each interval:

Table I)

| Order$^m$ | Definition Polynomial Base Spline Function |
|---|---|
| 0 | $$B^0 = \begin{cases} 1 & 0 \le x \le \Delta x \\ 0 & else \end{cases}$$ |
| 1 | $$B^1 = \begin{cases} \dfrac{x}{\Delta x} & 0 \le x \le \Delta x \\ 2 - \dfrac{x}{\Delta x} & \Delta x \le x \le 2\Delta x \\ 0 & else \end{cases}$$ |

(continued)

| Order$^m$ | Definition Polynomial Base Spline Function |
|---|---|
| 2 | $$B^2 = \begin{cases} \frac{1}{2}\left(\frac{x}{\Delta x}\right)^2 & 0 \le x \le \Delta x \\ -\left(\frac{x}{\Delta x}\right)^2 + 3\left(\frac{x}{\Delta x}\right) - \frac{3}{2} & \Delta x \le x \le 2\Delta x \\ \frac{1}{2}\left(3 - \frac{x}{\Delta x}\right)^2 & 2\Delta x \le x \le 3\Delta x \\ 0 & else \end{cases}$$ |
| 3 | $$B^3 = \begin{cases} \frac{1}{6}\left(\frac{x}{\Delta x}\right)^3 & 0 \le x \le \Delta x \\ \frac{1}{6}\left[-3\left(\frac{x}{\Delta x}\right)^3 + 12\left(\frac{x}{\Delta x}\right)^2 - 12\left(\frac{x}{\Delta x}\right)^2 + 4\right] & \Delta x \le x \le 2\Delta x \\ \frac{1}{6}\left[3\left(\frac{x}{\Delta x}\right)^3 - 24\left(\frac{x}{\Delta x}\right)^2 + 60\left(\frac{x}{\Delta x}\right)^2 - 44\right] & 2\Delta x \le x \le 3\Delta x \\ \frac{1}{6}\left(-\frac{x}{\Delta x} + 4\right)^3 & 3\Delta x \le x \le 4\Delta x \\ 0 & else \end{cases}$$ |

Therefore, an arbitrary characteristic Q(x) such as shown in Figure 4 not only can be approximated by an accumulation of linear base splines B$^1$ but also by an accumulation of higher order base splines B$^m$, hence, the characteristic Q(x) can be approximated piecewise, i.e. per interval, by higher order polynomials. As shown in Figure 8, the arbitrary characteristic Q(x) of Figure 4 is approximated by an accumulation of various cubic base splines B$^3$(x). In the diagram of Figure 8, the individual cubic base splines B$^3$(x) are shown prior to accumulation, and the cubic spline S$^3$(x) resulting from the accumulation of the individual base splines B$^3$(x) basically is identical to the arbitrary characteristic Q(x) and can not be distinguished from it in the diagram. Again, each cubic base spline B$^3$(x) can be derived by iterative integration from a constant value assigned to a single interval. For the reason that a cubic base spline B$^3$(x) extends over four intervals, in a per-interval-view four portions of cubic base splines assigned to various intervals contribute to the resulting spline portion in the respective interval wherein each base spline portion finally is derived from a constant value assigned to the interval of such base spline.

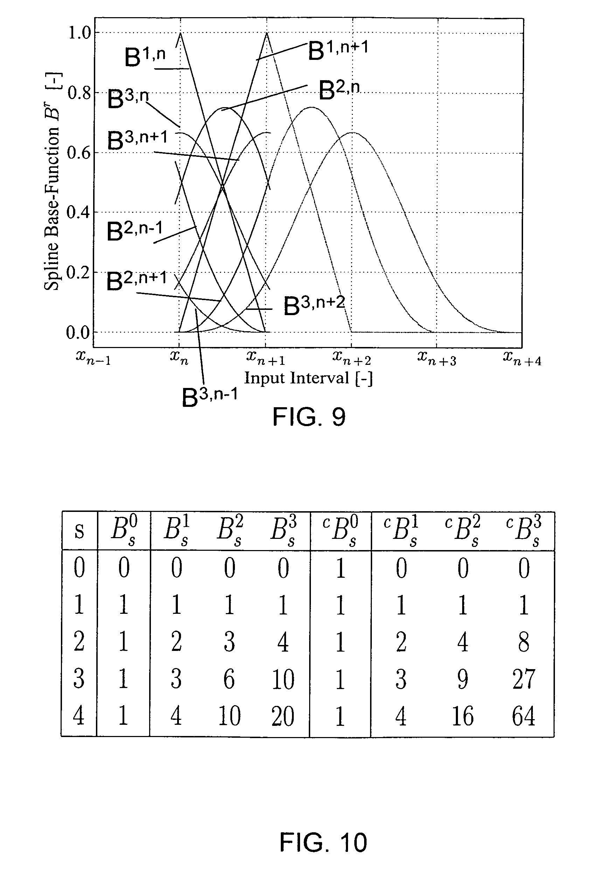

For facilitating the determination of such spline portions for a given interval, any portion of a base spline B$^m$ of Table I representing the base spline B$^m$ in an interval now is folded / virtually moved into a single interval. Such folding results in Table II, in which base splines B$^{mh}$ of various orders m as further presented in Figure 9 can mathematically be described by the expressions as listed. Here, the formulas no longer use x as input variable but rather $x_i = x - x_n$ with $x_n$ denoting the input value x at the beginning of the identified interval n such that $x_i$ represents the interval related value corresponding to the input value x. The interval value $x_i$ represents the input value x related to the beginning of the present identified interval n. The interval value $x_i$ may take values from [0, $\Delta x$] with $x_i = 0$ at the beginning of the interval and $x_i = \Delta x$ at the end of the interval wherein $\Delta x$ denotes the width of the identified interval n. All in all, the variable used to describe the portions of the base splines B$^{mh}$ now represents an interval related value, preferably normalized by the width $\Delta x$ of the interval, such that the variable may denote the normalized interval value $x_i / \Delta x$. Furthermore, in this notation, h represents the interval a moved / folded portion of a base spline stems from, e.g. according to Figure 7, which numbering of the interval is used in equivalence to the numbering of the "portion" of the base spline:

Table II)

| Order $B^m$ | Definition Polynomial Spline Base Function Folded to 1st Interval 0 |
|---|---|
| 0 | $B^{01} = 1$ |
| 1 | $B^{11} = \dfrac{x_I}{\Delta x}$ <br><br> $B^{12} = -\dfrac{x_I}{\Delta x} + 1$ |
| 2 | $B^{21} = \dfrac{1}{2}\left(\dfrac{x_I}{\Delta x}\right)^2$ <br><br> $B^{22} = -\left(\dfrac{x_I}{\Delta x}\right)^2 + \left(\dfrac{x_I}{\Delta x}\right) + \dfrac{1}{2}$ <br><br> $B^{23} = \dfrac{1}{2}\left(\dfrac{x_I}{\Delta x}\right)^2 - \left(\dfrac{x_I}{\Delta x}\right) + \dfrac{1}{2}$ |
| 3 | $B^{31} = \dfrac{1}{6}\left(\dfrac{x_I}{\Delta x}\right)^3$ <br><br> $B^{32} = -\dfrac{1}{2}\left(\dfrac{x_I}{\Delta x}\right)^3 + \dfrac{1}{2}\left(\dfrac{x_I}{\Delta x}\right)^2 + \dfrac{1}{2}\left(\dfrac{x_I}{\Delta x}\right) + \dfrac{1}{6}$ <br><br> $B^{33} = \dfrac{1}{2}\left(\dfrac{x_I}{\Delta x}\right)^3 - \left(\dfrac{x_I}{\Delta x}\right)^2 + \dfrac{4}{6}$ <br><br> $B^{34} = -\dfrac{1}{6}\left(\dfrac{x_I}{\Delta x}\right)^3 + \dfrac{1}{2}\left(\dfrac{x_I}{\Delta x}\right)^2 - \dfrac{1}{2}\left(\dfrac{x_I}{\Delta x}\right) + \dfrac{1}{6}$ |

In Figure 9, such view on an individual interval n is illustrated, for various orders of underlying base splines. For generating a linear spline portion $S^{1n}$ in such interval n for approximating a characteristic, the two linear base spline portions $B^{1n}$, $B^{1n+1}$ are summed up in the interval n; for generating a quadratic spline portion $S^{2n}$ in the interval n, the three quadratic base spline portions $B^{2n-1}$, $B^{2n}$, $B^{2n+1}$ are summed up; and for generating a cubic spline portion $S^{3n}$ in interval n, the four cubic base spline portions $B^{3n-1}$, $B^{3n}$, $B^{3n+1}$, $B^{3n+1}$ are summed up. In the given case, each base spline portion $B^{mh}$ is weighted with a factor of one. Consequently, the sum of the base spline portions $B^{mh}$ in a given interval has to be equal to one.

As noted above, depending on the order m chosen for the approximating spline, the associated base splines and their normalized representations may extend over several intervals. For each interval, the associated base spline portion is represented by a separate polynomial expression as can be derived from Table I. For the first interval $0 < x < \Delta x$, the higher order base spline expressions in Table I) are a result of integrating the constant base spline of such interval. The determination of polynomial expressions for subsequent intervals may be supported by applying conditions required to be fulfilled at the boundaries of the interval. Typically, a node represents the interface between the base spline portions of adjacent intervals such that the polynomial expressions of both intervals need to result in the same value at the node. The same is true for derivatives of the polynomial expressions of base spline portions of two adjacent intervals. In such manner, the polynomial expressions for each interval can be determined.

As a result, the base spline is a function defined piecewise by polynomials, i.e. per interval in the present application. When now the various base spline portions of chosen degree m overlapping in a single interval n are accumulated, a resulting spline portion $S^m_n(x)$ represents an approximation to the characteristic Q(x) for all values x in the interval n, and, for a specific input value x, determines the associated output value $S^m_n$ as approximate value. However, it is preferred that instead of using the input value x as variable the interval value $x_i$ may be used as variable which shall include any variable dependent from the interval value $x_i$ such as the normalized interval value $x_i/\Delta x$ wherein $x_1 = x - x_n = x - n\Delta x$ with $x_n$ denoting the input value x at the beginning of the identified interval n, and $\Delta x$ again denoting the width of the identified interval n. Such shift and normalization facilitates the determination of the spline in a given interval n. As a result, for various orders m of the spline and its associated base splines, the following mathematical equations determine the spline $S^m_n(x_i/\Delta x)$ for interval n:

Table III)

| Order $B^r$ | Definition Polynomial Spline Function of Interval $[x_n\ x_{n+1}]$ |
|---|---|
| 0 | $S^0_n = c_n B^{01},\ x_n \le x \le x_{n+1}$<br><br>$S^0_n = c_n$ |
| 1 | $S^1_n = c_{n+1} B^{11} + c_n B^{12},\ x_n \le x \le x_{n+1}$<br><br>$S^1_n = (c_{n+1} - c_n)\dfrac{x_i}{\Delta x} + c_n$ |
| 2 | $S^2_n = c_{n+1} B^{21} + c_n B^{22} + c_{n-1} B^{23},\ x_n \le x \le x_{n+1}$<br><br>$S^2_n = \left(\dfrac{c_{n+1} + c_{n-1}}{2} - c_n\right)\left(\dfrac{x_i}{\Delta x}\right)^2 + (c_{n+1} - c_n)\left(\dfrac{x_i}{\Delta x}\right) + \dfrac{c_n + c_{n-1}}{2}$ |
| 3 | $S^3_n = c_{n+2} B^{31} + c_{n+1} B^{32} + c_n B^{33} + c_{n-1} B^{34},\ x_n \le x \le x_{n+1}$<br><br>$S^3_n = \left(\dfrac{c_{n+2} - c_{n-1}}{6} - \dfrac{c_{n+1} - c_n}{2}\right)\left(\dfrac{x_i}{\Delta x}\right)^3 + \left(\dfrac{c_{n+1} + c_{n-1}}{2} - c_n\right)\left(\dfrac{x_i}{\Delta x}\right)^2$<br><br>$+ \left(\dfrac{c_{n+1} - c_{n-1}}{2}\right)\left(\dfrac{x_i}{\Delta x}\right) + \dfrac{c_{n+1} + 4c_n + c_{n-1}}{6}$ |

The expressions $B^{mh}$ in the first equations of each section indicate a base spline of degree m and portion h according to the Table II). For example, the second order spline $S^2_n$ is based on an accumulation of $B^{21}$ representing the first portion of a base spline of degree 2 - i.e. the rising portion such as depicted in Figure 7 in the first interval n=0 -, $B^{22}$ representing the second portion of a base spline of degree 2 - i.e. the peak portion such as depicted in Figure 7 in the second interval n=1, and $B^{23}$ representing the third portion of a base spline of degree 2 - i.e. the falling portion such as depicted in Figure 7 in the third interval n=2. Each base spline portion is multiplied with an associated constant value $c_{n+/-k}$ representing the constant value assigned to the respective interval the portion origins from. This is comprehensible for the reason that the base spline portions to be accumulated in interval n comprise

- the rising portion of the base spline assigned to the next interval n+1 and thus being dependent from the constant value $c_{n+1}$ which forms the basis for generating the base spline assigned to interval n+1,
- the peak / middle portion of the base spline assigned to the present interval n and thus being dependent from the constant value $C_n$ which forms the basis for generating the base spline assigned to interval n,
- and the falling portion of the base spline assigned to the previous interval n-1 and thus being dependent from the

constant value $C_{n-1}$ which forms the basis for generating the base spline assigned to interval n-1.

By inserting the mathematical expressions for each base spline portion as given in Table II) into the first equation in each section of Table III), the second equation in each section in Table III) results and represents the mathematical expression of a spline portion for the subject interval n wherein the base spline portions stemming from various intervals and affecting the present interval n are transformed into expressions solely being dependent from the input value x falling in such interval n, and from coefficients being dependent on constants $C_{n+/-k}$ assigned to the various intervals n+/-k.

The general expression for a spline in interval n is

$$S_n^m = \sum_{d=0}^{d=m} C_d^m \left( \frac{x_i}{\Delta x} \right)^d = \sum_{d=0}^{d=m} C_d^m B_s^d \qquad \text{equation II)}$$

This means, that a spline value $S_n^m$ - which is an approximate value and is also referred to as output value - can be calculated for the identified interval n only being subject to various coefficients $C_d^m$ - collectively denoted as set of coefficients $C_d^m$ - and being subject to the normalized input value $x_i/\Delta x$. The coefficients $C_d^m$ in turn depend on the constants $C_{n+/-k}$ assigned to the various intervals n+/-k, the constants used for determining the set of coefficients $C_d^m$ also being denoted as set of constants $C_{n+/-k}$.

For example, for a quadratic spline $S^2$ the coefficients $C_d^2$ in equation II) are determined by:

$$C_2^2 = \left( \frac{c_{n+1} + c_{n-1}}{2} - c_n \right) \qquad \text{equation III)}$$

$$C_1^2 = \left( c_{n+1} - c_n \right) \qquad \text{equation IV)}$$

$$C_0^2 = \frac{c_n + c_{n-1}}{2} \qquad \text{equation V)}$$

wherein n denotes the identified interval n, $C_n$ denotes the constant assigned to the identified interval n, $C_{n-1}$ denotes the constant assigned to the interval n-1 previous to the identified interval n, and $C_{n+1}$ denotes the constant assigned to the interval n+1 subsequent to the identified interval n.

For example, for a cubic spline $S^3$ the coefficients $C_d^3$ in equation II) are determined by:

$$C_3^3 = \left( \frac{c_{n+2} - c_{n-1}}{6} - \frac{c_{n+1} - c_n}{2} \right) \qquad \text{equation VI)}$$

$$C_2^3 = \left( \frac{c_{n+1} + c_{n-1}}{2} - c_n \right) \qquad \text{equation VII)}$$

$$C_1^3 = \left( \frac{c_{n+1} - c_{n-1}}{2} \right) \qquad \text{equation VIII)}$$

$$C_0^3 = \frac{c_{n+1} + 4c_n + c_{n-1}}{6} \qquad \text{equation IX)}$$

wherein n denotes the identified interval n, $C_n$ denotes the constant assigned to the identified interval n, $C_{n-1}$ denotes

the constant assigned to the interval n-1 previous to the identified interval n, $C_{n+1}$ denotes the constant assigned to the interval n+1 subsequent to the identified interval n, and $C_{n+2}$ denotes the constant assigned to the interval n+2 subsequent to the identified interval n by two.

Now, as the coefficients $C^m_d$ of the polynomial spline $S^m_n$ for each interval n can be determined, the variable expressions $x_i/\Delta x$ of various degrees in the terms of equation II) which variable expression $x_i/\Delta x$ represents the normalized input value in the interval n - i.e. the normalized interval value $x_i/\Delta x$ - is to be determined. For a specific input value x=S received the associated input interval value $x_i$=s, or its associated normalized input interval value s/$\Delta x$ is determined. In the present example, the normalized input interval value s/$\Delta x$ is used as a variable for the polynomial representing the spline in the identified interval n..

The variable $(x_i/\Delta x)^d$ in the above equation II) represents an integration over $(x_i/\Delta x)^{d-1}$ in the continuous time domain for building the respective base spline portions based on the recursive definition of normalized based splines given in equation I). Such integration in the continuous time domain can be approximated in the discrete time domain by a summation. Specifically, an integration in the continuous time domain starting at the beginning of the interval and continuing until the determined input interval value $x_i$=s is reached can be approximated in the time discrete domain by accumulating all possible discrete interval values $x_i$ between the beginning of the interval $x_i$=0 and the input interval value $x_i$=s.

The power d of the above variable expression $(x_i/\Delta x)^d$ in the equation II) denotes the number of iterative integrations in the continuous time domain needed to be executed, and correspondingly denotes the number of iterative accumulations to be applied in discrete time domain.

The table in Figure 10 illustrates an iterative accumulation for various input interval values s, see the first column, and for various degrees of splines d=0,1,2 and 3. The second and all subsequent columns list so called interim values $B^d_s$ representing the base spline values for the subject degree d and the subject input interval value s. Consequently, an interim value $B^d_s$ for degree d and for the input interval value s represents the variable of the polynomial, i.e. the normalized input interval value s/$\Delta x$ to the power of d in a discrete fashion.

As such, the second column shows the uniform interim values $B^0_s$ representing the constant base spline $B^0$ without a weighting factor in the identified interval n, i.e. the interim values $B^0_s$ based on which the interim values of higher order base splines $B^d$ will be determined. The zero order interim values $B^0_s$ are set to all ones for any interval value $x_i$ in the identified interval n.

The first order interim values $B^1_s$ for various input interval values $x_i$=s now is determined by summing up all interim values $B^0_s$ of lower degree from the interval value $x_i$=0 up to the input interval valuze $x_i$=s:

$$B^1_s = \left[ \frac{1}{\Delta} \sum_{i=0}^{i=s} B^0_i \right] \Delta^2 \qquad\qquad \text{equation X)}$$

The second order interim value $B^2_s$ for various input interval values $x_i$=s now is determined by summing up all interim values of first degree $B^1_s$ up from the interval value x =0 up to the input interval value $x_i$=s:

$$B^2_s = \left[ \frac{1}{\Delta} \sum_{i=0}^{i=s} B^1_i \right] \Delta^2 \qquad\qquad \text{equation XI)}$$

The third order interim value $B^3_s$ for various input interval values $x_i$=s now is determined by summing up all interim values of second degree $B^2_s$ up from the interval value $x_i$=0 up to the input interval value $x_i$=s:

$$B^3_s = \left[ \frac{1}{\Delta} \sum_{i=0}^{i=s} B^2_i \right] \Delta^2 \qquad\qquad \text{equation XII)}$$

In all the above equations, $\Delta$ denotes the distance between two neighbouring interval values $x_i$, also denoted as step increment size.

All the interim values referred to in the previous sections are shown in Figure 10 in the columns to the left.

For the reason that the iterative summation of discrete interim values $B^d_s$ represents only an approximation to the continuous time integration, deviations may occur since the step increment function used in the time discrete domain only represents an approximation to a continuous function. The deviation is dependent from the sampling period $1/\Delta$. The above approximation may be preferred for a small step increment size within the interval. For defining the sum to deviate less from to the integral representation in the continuous time domain independent of step increment size $\Delta$, in a preferred embodiment, the accumulation in the time discrete domain is modified, wherein $B^d_s$ is replaced by a corrected value ${}^cB^d_s$. With such approach a sensor signals non-linearity can be corrected with an even better accuracy. For the scope of protection, it is not relevant if the expression $B^d_s$ or the expression ${}^cB^d_s$ is used as both represent interim values just being determined in different ways.

The first order interim value ${}^cB^1_s$ for various input interval values $x_i=s$ now is determined by summing up all interim values of lower degree from the interval value $x_i=0$ up to the input interval value $x_i=s-1$, with:

$$ {}^cB^0_i = 1, i = 0 \ldots k, k = s/\Delta $$

$$ {}^cB^1_{s=k\Delta} = \left[ \frac{1}{\Delta} \sum_{i=0}^{k-1} {}^cB^0_{i\Delta} \right] \Delta^2 \qquad \text{equation XIII)} $$

For the moment, we will set the step increment value $\Delta=1$, resulting in $k=s$. The second order interim value ${}^cB^2_s$ for various interval values $s$ now is determined. Accordingly, the interim value ${}^cB^2_s$ for degree $d=2$ for the input interval value $s$ is determined based on an accumulation of the interim values ${}^cB^1_s$ associated with degree $d=1$ determined for each interval value $x_i$ up to the identified sampling point $s$ less one, weighted by a factor 2, and based on the interim value ${}^cB^1_s$ determined for degree $d=1$ for the input interval value $x_i=s$:

$$ {}^cB^2_{s=k\Delta} = \left[ \frac{1}{\Delta} {}^cB^1_s + \frac{2}{\Delta} \sum_{i=0}^{k-1} {}^cB^1_{i\Delta} \right] \Delta^2 \qquad \text{equation XIV)} $$

The third order interim value ${}^cB^3_s$ for various input interval value $x_i=s$ now is determined. Accordingly, the interim value ${}^cB^3_s$ of a variable expression of degree $d=3$ for the input interval value $x_i=s$ is determined based on an accumulation of the interim values ${}^cB^2_s$ associated with degree $d=2$ determined for each interval value $x_i$ up to the input interval value $x_i=s$ less one, weighted by a factor 3, and based on the interim value $B^2_s$ for degree $d=2$ for the input interval value $x_i=s$, weighted by a factor of 3/2, and based on the interim value ${}^cB^1_s$ for degree $d=1$ for the the input interval value $x_i=s$ weighted by a factor 1/2:

$$ {}^cB^3_{s=k\Delta} = \left[ \frac{3}{2\Delta} {}^cB^2_s - \frac{1}{2\Delta} {}^cB^1_s + \frac{3}{\Delta} \sum_{i=0}^{k-1} {}^cB^2_{i\Delta} \right] \Delta^2 $$
$$ \text{equation XV)} $$

The forth order interim value ${}^cB^4_s$ for various input interval values $x_i=s$ now is determined. Accordingly, the interim value ${}^cB^4_s$ for degree $d=4$ for the input interval value $x_i=s$ is determined based on an accumulation of the interim values ${}^cB^3_s$ associated with degree $d=3$ determined for each interval value $x_i$ up to the input interval value $x_i=s$ less one, weighted by a factor 4, and based on the interim value $B^3_s$ for degree $d=3$ for input interval value $x_i=s$, weighted by a factor 2, and based on the interim value ${}^cB^2_s$ for degree $d=2$ for the input interval value $x_i=s$:

$$ {}^cB^4_{s=k\Delta} = \left[ \frac{4}{2\Delta} {}^cB^3_s - \frac{2}{2} {}^cB^2_s + \frac{4}{\Delta} \sum_{i=0}^{k-1} {}^cB^3_{i\Delta} \right] \Delta^2 $$
$$ \text{equation XVI)} $$

The results achieved by the modified accumulation are shown in the right hand part of the table in Figure 10.

In particular, by such modification the higher degree interim values rise and better accommodate to values as would be achieved in a continuous time integration.

In such manner for any input interval value s in any identified interval n the associated interim value $B^d_s$ of the required degree d can be determined simply by means of counters. It is noted that the present interim values are valid for each interval since the weighting factors represented by the constants c assigned to the various intervals n+/-k were separated and impacting the calculation of the coefficients only.

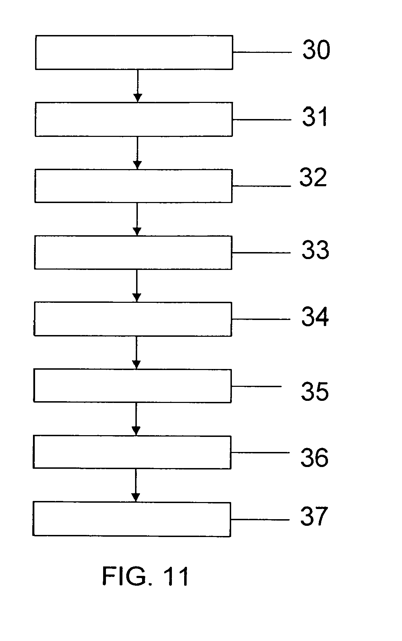

The flow chart of Figure 11 illustrates an exemplary method for determining an output value in response to an input value supplied by a sensor which output value represents an approximation to a value of a characteristic. Upon receiving an input value x=S of digital nature in step 30, an interval n is identified in step 31 into which the received input value falls. It is assumed, that a range of possible input values is divided into intervals prior to step 30 in a preparation step prior to executing an approximation. Provided that the received input value is a digital value comprised in a codeword of several bits, the interval n can be derived from the most significant bits of the code word. The number of most significant bits to be analyzed for identifying the interval n depends on the number of intervals provided. It is preferred, that e.g. the p most significant bits determine the interval when $2^p$ intervals are provided.

Once the interval n is determined, the coefficients C needed for calculating the output value are calculated in step 32, e.g. according to equations III) to V), or according to equations VI) to IX) subject to the order m of the spline. Starting with step 33, values are assigned to the variable expressions $x_i/\Delta x$ defining the polynomial spline portion for the identified interval n. First, in step 33, the received input value x=S is mapped to an interval value $x_i=s$ in the identified interval n. For such reason, the input value x as received is transformed into a value normalized with respect to the present identified interval n and refers to the beginning of the present interval n. Given that the input values x are of discrete nature, an interval may cover an amount of $y=\Delta x$ possible different input values $x_i$ spread equidistantly across the interval width of $\Delta x$. Each possible input value $x_i$ within an interval in a normalized notation may take values i=[0, 1, 2 ...y-1] with all possible interval values i being integers. The input interval value s may be derived from the input value x by cutting its p most significant bits serving for identifying the interval. As a result, the remaining q least significant bits indicate the input interval value s, i.e. the position of the input value relative to the beginning of the present interval n which shall include a normalized value, too.

In step 35, the interim values $B^d_s$ are determined for each variable $x_i/\Delta x$ of degree d according to equation XIII). In step 36, the determined coefficients $C^m_d$ are multiplied by the determined associated interim values $^cB^d_s$ and the results of these multiplications are summed up in step 37 for realizing equation II) and calculating the spline value $S^m_n$ for the input interval value $x_i=s$ in the identified interval n.

For example, equation II) reads for a spline of degree m=3 as follows:

$$S^3_n = C^3_3\left(\frac{x_i}{\Delta x}\right)^3 + C^3_2\left(\frac{x_i}{\Delta x}\right)^2 + C^3_1\left(\frac{x_i}{\Delta x}\right) + C^3_0 \quad \texttt{equation XVII)}$$

Such equation comprises four terms for being added. Each term comprises a multiplication of a coefficient C and the variable $x_i/\Delta x$ to the power of d with d being equal to the degree m of the spline or being less. In the specific instance of spline degree m=3, there is a variable expression $x_i/\Delta x$ of degree one, a variable expression $x_i/\Delta x$ of degree 2, and a variable expression $x_i/\Delta x$ of degree 3. In a preferred embodiment, for each variable expression $x_i/\Delta x$ an interim value $B^d_s$ of degree d and for the input interval value $x_i=s$ will be determined according to the table in Figure 10. For example, for the input interval value s=3, the interim value $B^3_3$ of degree 3 is 27, the interim value $B^2_3$ of degree 2 is 8, and the interim value $B^1_3$ for degree 1 is one. Each of these interim values $B^d_3$ is multiplied by its associated coefficient $C^3_d$ such that the output value $S^3_n$ can be determined by accumulating all the products of interim values $B^d_3$ and associated coefficients $C^3_d$.

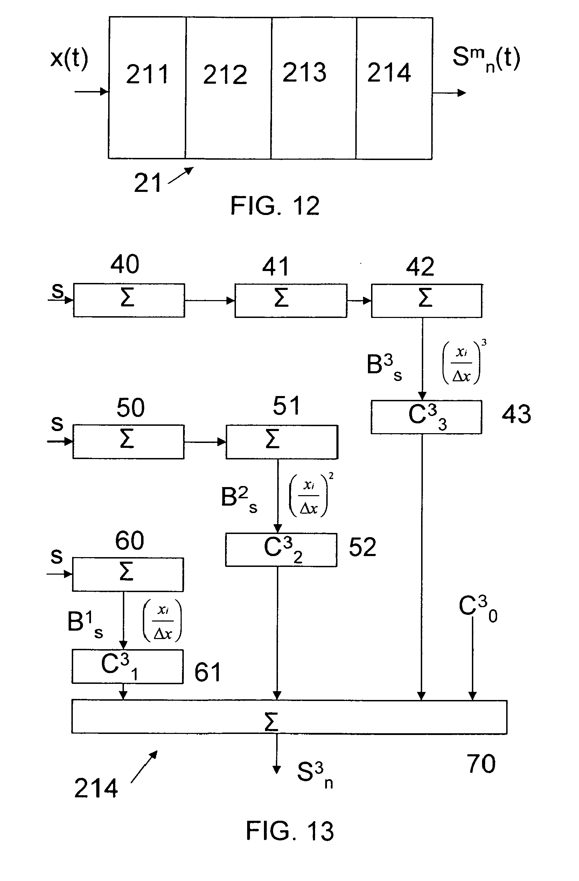

What in particular is interesting in such determination of the output value $S^3_n$, and in general for any output value $S^m_n$, is that all the calculation can solely be built on adders/counters and as such can easily be implemented in hardware. For each term with a variable expression $x_i/\Delta x$ of degree d, d counters need to be provided in a serial arrangement. Overall, for determining the output value of a spline $S^m_n$ of degree m according to equation II), an arrangement of minimum $\Sigma m$ counters is needed. Such sample accumulation unit 214 is illustrated in a block diagram of Figure 13. The accumulation unit 21 includes adders 40, 41 and 42 for implementing the first variable expression $x_i/\Delta x$ of degree d=3. Input to such adders 40, 41, 42 is the input interval value s. The output of adder 42 is interim value $B^3_s$ representing an approximation to $(x_i/\Delta x)^3$ which is multiplied by coefficient $C^3_3$ in multiplier 43. Coefficient $C^3_3$ is determined up-front. Adders 50 and 51 are provided for implementing the second variable expression $x_i/\Delta x$ of degree d=2. Input to such adders 50, 51 is the input interval value s. The output of adder 51 is interim value $B^2_s$ representing an approximation to $(x_i/\Delta x)^2$ which is multiplied by coefficient $C^3_2$ in multiplier 52. Coefficient $C^3_2$ is determined up-front. And another adder 60 is provided for implementing the third variable expression $x_i/\Delta x$ of degree d=1, with the input interval value s as input.

The output of adder 60 is interim value $B^1_s$ representing an approximation to $(x_i/\Delta x)$ which is multiplied by coefficient $C^3_1$ in multiplier 61. Coefficient $C^3_1$ is determined up-front. Any multiplication of the coefficients $C^3_d$ with the associated interim values $B^d_s$ can also be implemented by means of adders as is commonly known.

For summing up the interim values $B^d_s$ multiplied by the associated constants $C^3_d$, another adder 70 may be provided wherein another term, i.e. coefficient $C^3_0$ is added according to equation IX). The adder 70 then provides the spline value $S^3_n$ at its output. Any scaling factors, e.g. $\Delta$, may be applied previous to providing the output value $S^3_n$ as needed.

Instead of providing the input value $x_i$ to the adders, the corresponding coefficient $C^m_d$ may be directly input to the associated counters. Then, a post-counter multiplication can be avoided.

Such accumulation unit 214 may be part of an approximation unit 21 as shown in Figure 12, according to an embodiment of the present invention. The approximation unit 21 comprises an interval identifier 211 receiving input values x(t) over time, which input values x(t) preferably are of discrete nature and may be represented in a specific embodiment as a binary code word. For each such discrete input value x=S, the interval identifier analyzes into which of several input intervals the received input values falls into. Subject to the identified interval n, coefficients are determined in the coefficient calculator 212 which coefficients co-define the spline $S^m_n$ in the identified interval n. In an input value mapper 213, the received input value x=S is mapped to an input interval value $x_i=s$ with respect to the beginning of the identified interval n. And finally, in the accumulation unit 214, the interim values $B^d_s$ needed for co-defining the output value $S^m_n$ of the spline for the identified interval n and the input interval value $x_i=s$ are determined, such that at the output of the approximation unit 21 output values $S^m_n(t)$ over time t are provided in response to the input values x(t) over time, which output values $S^m_n$ represent an approximation to the characteristic Q (x) .

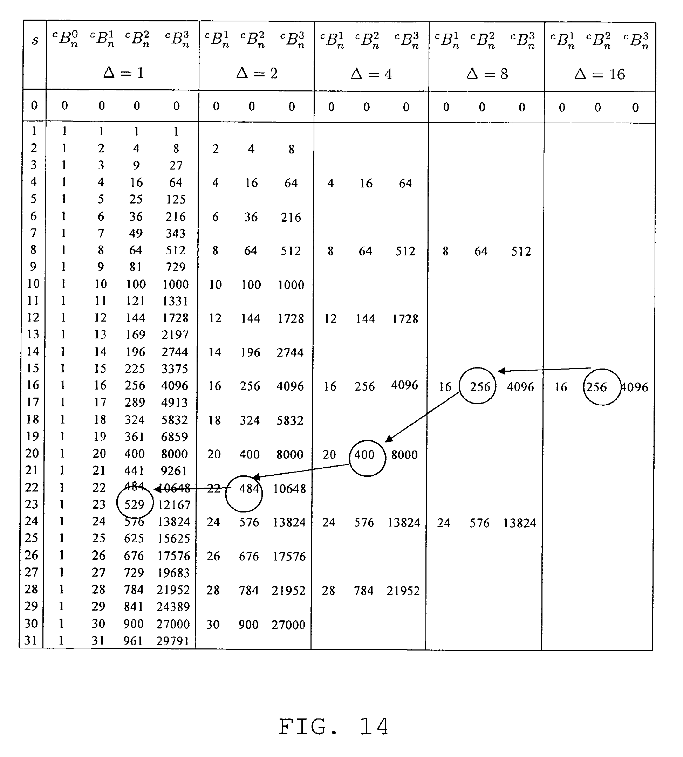

Figure 14 shows a table illustrating the building of interim values according to embodiments of the present invention. The table is similar to the table of Figure 10. The first column denotes the input interval value s while in the following columns the associated interim values $^cB^d_s$ are shown for various degrees d=0,1,2,3. The interim values are calculated according to equations XIII) to XV) representing the modified calculation which results better approximate the integration in the continuous time domain. As such, the table of Figure 14 represents the right hand table portion of Figure 10, however, for an interval divided into a larger number y of interval values $x_i$, in the present example of y=32 interval values. The step increment size is $\Delta=1$ such that for a total of y=32 interval values $x_i$ the interval width results in $\Delta x=32$. The step increment size of $\Delta=1$ is also denoted as regular step increment size to be used for a fine resolution. In addition, the table in Figure 14 provides various vertical sections. Each section lists the results for interim values $^cB^d_s$ for different step increment sizes of $\Delta=1,2,4,8,16$ according to equations XIII) to XV). The more the step increment size $\Delta$ increases the fewer interval values $x_i$ are available within the interval of width $\Delta x=32$. In the very last section to the right, the step increment size is $\Delta=16$ which results in only three interval values $x_i$ available at the interval value $x_i=0$, at half of the interval width $x_i=\Delta x/2$ and at the full interval width $x_i=\Delta x$. The associated interim values $^cB^d_s$ are illustrated for the interval values $x_i$ available. These interim values $^cB^d_s$ may be determined by means of equations XIII) to XV), too, with the associated step increment size to be applied in these equations.

The expressions of equations XIII) to XV), i.e. the interim values $^cB^d_s$ in a modified version subject to the degree d, the interval value $x_i$ and the step increment size $\Delta$ can also be defined recursively according to the following equations:

$$^cB^0_i = \Delta, i = 0......s$$

$$^cB^1_{s=k\Delta} = {}^cB^1_{(k-1)\Delta} + \Delta \qquad\qquad \text{equation XVIII)}$$

$$^cB^2_{s=k\Delta} = ({}^cB^1_{k\Delta} + {}^cB^1_{(k-1)\Delta})\Delta + {}^cB^2_{(k-1)\Delta} \qquad\qquad \text{equation XIX)}$$

$$^cB^3_{s=k\Delta} = (2*{}^cB^2_{k\Delta} + {}^cB^2_{(k-1)\Delta})\Delta - {}^cB^1_{k\Delta}\Delta^2 + {}^cB^3_{(k-1)\Delta}$$

$$\text{equation XX)}$$

$$^{c}B^{4}_{s=k\Delta} = 2(^{c}B^{3}_{k\Delta} + {}^{c}B^{3}_{(k-1)\Delta})\Delta - (^{c}B^{2}_{k\Delta} - {}^{c}B^{2}_{(k-1)\Delta})\Delta^{2} + {}^{c}B^{4}_{(k-1)\Delta}$$

equation XXI).

wherein k denotes the fraction of the input interval value s divided by the step increment size $\Delta$.

In such representation, the interim value $^{c}B^{d}_{s}$ of a given degree d for the input interval value s is determined subject to an interim value of a degree lower than d and/or an interim value for an interval value $x_i$ lower than s. For example, the interim value $B^{d}_{s}$ for degree d=3 and input interval value s is determined subject to an interim value for degree d=2 for the input interval value s, subject to an interim value for degree d=2 for the next lower interval value, subject to an interim value for degree d=1 for the input interval value s, and subject to an interim value for the present degree d=3 for the next lower interval value. All these interim values required for determining the present interim value may be determined themselves by using the recursive form of equations XVIII) to XXI).

In particular the recursive form according to equations XVIII) to XXI) allows determining interim values $^{c}B^{d}_{s}$ used in the polynomial defining the normalized spline $S^{m}$ in the identified interval n and as such allows determining the output value $S^{m}_{n}$ with an exponential approximation.

In a preferred embodiment of the present invention, a method is provided for determining the interim values $^{c}B^{d}_{s}$ in a very efficient way requiring only few processing steps. Such embodiment makes use of varying the step increment size. For determining an interim value $^{c}B^{d}_{s}$ of degree d for the input interval value s, at least one temporary interim value $tB^{d}_{s}$ is determined for a modified step increment size exceeding a regular step increment size. In the example of Figure 14, it is assumed that the regular step increment size $\Delta=1$. The modified step increment size to start with shall preferably be the highest step increment size available, i.e. step increment size $\Delta=16$, which typically is the step increment size $\Delta$ dividing the interval width $\Delta w$ by two and as such comprising only two associated allowed interval values, i.e. $x_i= 0$ and $x_i=16$ in the present example.

Out of these available interval values $x_i= 0$ and $x_i=16$ associated with the modified step increment size $\Delta=16$ the one is selected that is not more than the input interval value s and comes closest to the input interval value s.

In an example chosen for illustration purposes, it is assumed that the input interval value $x_i=s=23$. For modified step increment size of $\Delta=16$ an interval value of $x_i=16$ is selected that fulfils the above criteria of not exceeding the input interval value of s=23 but coming closest. In such example, a sample degree shall be chosen to d=2. Accordingly, a temporary interim value $tB^{d}_{s}$ can be determined according to equation XIX). In equation XIX), the interim value $B^{2}_{16}$ can be determined subject to the interim value $B^{1}_{16}$ of lower degree d=1 for the presently selected interval value $x_i=16$. Such term equals to the present step increment size of $\Delta=16$ and is known upfront. Further the interim value $B^{2}_{16}$ is based on the interim value $B^{1}_{0}$ of lower degree d=1 for the next lower interval value $x_i=0$ available. Such term equals to zero and is known upfront. Further the interim value $B^{2}_{16}$ is based on the interim value $B^{2}_{0}$ of present degree d=2 for the next lower interval value $x_i=0$ available. Such term equals to zero and is known upfront. Accordingly, by way of multiplying $B^{1}_{16}$ times the modified step increment size of $\Delta=16$, the temporary interim value $tB^{2}_{16}$ results in a value of 256, highlighted by a circle in Figure 14. Such temporary interim value $tB^{d}_{s}$ is stored at least temporarily.

For the reason that the selected interval value $x_i=16$ is not yet equal to the input interval value s=23, the temporary interim value $tB^{d}_{s}$ does not represent the interim value $B^{2}_{23}$ to be determined. This is why in a next step the modified step increment size of $\Delta=16$ is reduced to the next lower increment step size which in the present example is the reduced step increment size of $\Delta=8$.

An interval values $x_i$ associated with the reduced step increment size of $\Delta=8$ is to be selected according to the following criteria of such selected interval not being more than the input interval value s and at the same time coming closest to the input interval value s. For reduced step increment size of $\Delta=8$ an interval value of $x_i=16$ is selected that fulfils the above criteria of not exceeding the input interval value of s=23 but coming closest. The associated temporary interim value $tB^{2}_{16}=256$ was already determined in connection with the modified step increment size $\Delta=16$ and is available. The present position in the table of Figure 14 is indicated by a circle, again.

For the reason that the selected interval value $x_i=16$ is not yet equal to the input interval value s=23, the temporary interim value $tB^{2}_{16}$ does not represent the interim value $B^{2}_{23}$ to be determined. This is why in a next step the reduced step increment size of $\Delta=8$ is further reduced to the next lower increment step size which in the present example is the reduced step increment size of $\Delta=4$.

In the present example, by reducing the step increment size from $\Delta=8$ to $\Delta=4$ results in a selection of interval value $x_i=20$, since such interval value $x_i=20$ comes does not exceed the input interval value s=23 but comes closest out of all the interval values $x_i$ available for reduced step increment size $\Delta=4$. Hence, a new temporary interim value $tB^{d}_{s}$ is calculated for the new selected interval values $x_i=20$ according to equation XIX), in which $B^{2}_{20}$ can be determined subject to the interim value $B^{1}_{20}$ of lower degree d=1 for the presently selected interval value $x_i=20$. Such term equals to the presently selected interval value $x_i=20$ and is known upfront. Further the interim value $B^{2}_{20}$ is based on the interim value

$B^1_{16}$ of lower degree d=1 for the next lower interval value $x_i$=16. Such term equals to the interval value $x_i$=16 itself and is known upfront. Further the interim value $B^2_{20}$ is based on the interim value $B^2_{16}$ of present degree d=2 for the next lower interval value $x_i$=16. Such term equals the previously determined temporary interim value $tB^2_{16}$=256 and is known. Inserting all these values and the reduced step increment size $\Delta$=4 into the equation XIX), the new temporary interim value results in the value of $B^2_{20}$= 400. The present position in the table of Figure 14 is indicated by a circle, again.

This procedure is repeated until the step increment size $\Delta$ is reduced down to the regular step increment size of $\Delta$=1. This is the ultimate step where the stop condition of the selected interval value being equal to the input interval value s=23, in the present example, will be fulfilled. However, in case such stop condition is fulfilled in a previous step related to any one of the step increment sizes exceeding the regular step increment size, there is no need for further reducing the step increment size, and the temporary interim value for the associated selected interval value $x_i$ represents the interim value to be determined $tB^d_s=B^d_s$.

For the present example, for the next reduced step size $\Delta$=2 a new interval value of $x_i$=22 is selected and the associated temporary interim value is determined to $tB^d_s$=484, see the circle in Figure 14. In a final step, by reducing the step increment size down to the regular step increment size of $\Delta$=1, the interval value $x_i$=23 is selected being equal to the input interval value s=23 and an associated temporary interim value is determined to $tB^2_{23}$=529 is determined from all known values according to equation XIX).

In the above procedure, only a few computational steps need to be implemented for obtaining the interim value to be determined in a very efficient way. Accordingly, it is started with a large step increment size which will successively be reduced as the desired value is approached. At maximum, for each modified/reduced step increment size an associated temporary interim value needs to be determined, wherein a temporary interim value determined for a first step increment size being used in the determination of a temporary interim value of a second step increment size being less than the first step increment size, and wherein the temporary interim value being determined for a selected interval value being equal to the input interval value being set to the interim value to be determined.

In an alternate embodiment, and subject to a binary system being applied, the input interval value s may be represented by a binary figure, in the above example s=23=10111. In such representation, it can easily be derived at which step increment size temporary interim values are required to be determined. A method can be defined which analyzes such binary representation starting from the most significant bit which represents the need for calculating a temporary interim value at the most coarse step increment size. Such approach shall also be encompassed by the presently claimed method.

Therefore, to achieve a value of $B^d_s$, one can either choose the regular step increment size $\Delta$=1 and accumulate over s step increments, or choose a modified step increment size $\Delta$ and accumulate over s/$\Delta$ step increments.

In a preferred embodiment, the characteristic Q(x) to be approximated is in inverse of the transfer function x(Q) of a sensor. Hence, process variations resulting in deviations from the sensor transfer function x(Q) can easily be compensated by means of adjusting the coefficients, for example, for approximating a slightly different inverse for the deviated sensor transfer function.

The approximation method can easily be implemented in hardware logic, e.g. in a system on a chip, and an arbitrary function can be approximated by a spline function of any order. The method can even be extended to several input parameters, e.g. to calculate a dew point based on sensor inputs from a humidity sensor and a temperature sensor, which simply increases the dimension in which spline interpolation is performed. Spline interpolation can be carried out by means of weighted normalized base-splines, also known as B-splines. The weighting factors, also known as coefficients, can be determined by a linear equation system. Here, the number of unknown is equivalent the number of interval values up to spline interpolation of 1st order, or the number of interval values plus two for spline interpolation of 2nd order and higher. The normalized base splines can be defined as a linear combination of numbers, generated by simple counters. Even more, the weighting factors, i.e. the constants, can simply be introduced by the starting condition of the counters. This results in a multiplication

$$C \times {}^cB^d_s \ \text{with} \ {}^cB^0_i = 1, i = 0.......k, k = s/\Delta$$
$$\text{equation XXII)}$$

It is equivalent to choose the starting condition of ${}^cB^0_s$ equal to C, e.g.

$$\Delta 1 \times {}^cB^d_s \ \text{with} \ {}^cB^0_i = C, i = 0.......k, k = s/\Delta$$
$$\text{equation XXIII)}$$

As for the case of implementing the approximation by means of logic in form of linear counters, the approximation method is purely sequential. In a preferred embodiment, the normalized and weighted B-splines are determined recursively with variable step increment width. As a consequence, calculation of a particular spline-value converges exponential.

A preferred physical implementation in digital logic requires only counters and adders and, consequently, can be implemented very area efficient on a chip.

The sensor can be any sensor, and in particular can be one of a humidity sensor, a flow sensor, a chemical sensor, an infrared sensor or a pressure sensor.

The method may also be embodied as method for determining an output value in response to two or more input values supplied by one or more sensors which output value represents an approximation to a value of a characteristic. In such scenario, a two or more dimensional spline is generated.

**Claims**

1. Method for determining an output value ($S^m_n$) in response to an input value (x=S) supplied by a sensor (1) which output value ($S^m_n$) represents an approximation to a value of a characteristic (Q(x)),
   wherein a range of input values (x) is divided into intervals, and wherein each interval comprises a set of interval values ($x_i$) representing possible discrete input values in and relative to such interval,
   wherein in response to receiving the input value (S) an interval (n) associated with the received input value (S) is identified,
   wherein a set of coefficients ($C^m_d$) is determined for the identified interval (n) based on a set of constants ($C_{n+/-k}$) selected from a multitude of constants each constant ($C_{n+/-k}$) being assigned to one of the intervals and representing a constant value for being integrated m times resulting in a base spline ($B^m$) of degree m, an approximation to the characteristic (Q(x)) being formed by accumulating the base splines ($B^m$) into a spline ($S^m$) of degree m, and the set of determined coefficients ($C^m_d$) forming a polynomial in combination with the interval value ($x_i$) as a variable of degree m and less which polynomial represents the spline ($S^m$) in the identified interval (n),
   wherein the received input value (S) is mapped to an input interval value ($x_i$=s),
   wherein for each expression of the input interval value (s) to the power of m or less in the polynomial an interim value ($B^d_s$) is determined based on an interim value determined for a lower interval value and/or a lower degree, and wherein the output value ($S^m_n$) is determined based on the interim values ($B^d_s$) and the coefficients ($C^m_n$) .

2. Method according to claim 1, wherein the output value ($S^m_n$) is determined by:

$$S^m_n = \sum_{d=0}^{d=m} C^m_d \left(\frac{s}{\Delta x}\right)^d = \sum_{d=0}^{d=m} C^m_d B^d_s$$

wherein

   m denotes the degree of the spline,
   n denotes the identified interval,
   $\Delta x$ denotes the width of the identified interval n,
   S denotes the received input value x,
   s denotes the input interval value s=S-n*$\Delta x$,
   s/$\Delta x$ denotes the normalized input interval value,
   $S^m_n$ denotes the output value,
   $B^d_s$ denotes the interim value, and
   $C^m_d$ denotes the coefficient.

3. Method of claim 1 or claim 2, wherein for the spline ($S^m$) of degree m=2 the coefficients ($C^m_d$) are determined by:

$$C^2_2 = \left(\frac{c_{n+1} + c_{n-1}}{2} - c_n\right)$$

$$C_1^2 = \left( c_{n+1} - c_n \right)$$

$$C_0^2 = \frac{c_n + c_{n-1}}{2}$$

wherein

n denotes the identified interval n,
$C_n$ denotes the constant assigned to the identified interval n,
$C_{n-1}$ denotes the constant assigned to the interval n-1 previous to the identified interval n, and
$C_{n+1}$ denotes the constant assigned to the interval n+1 subsequent to the identified interval n.

4. Method of claim 1 or claim 2, wherein for the spline ($S^m$) of degree m=3 the coefficients ($C^m_d$) are determined by:

$$C^3_3 = \left( \frac{c_{n+2} - c_{n-1}}{6} - \frac{c_{n+1} - c_n}{2} \right)$$

$$C^3_2 = \left( \frac{c_{n+1} + c_{n-1}}{2} - c_n \right)$$

$$C^3_1 = \left( \frac{c_{n+1} - c_{n-1}}{2} \right)$$

$$C^3_0 = \frac{c_{n+1} + 4c_n + c_{n-1}}{6}$$

wherein

n denotes the identified interval n,
$C_n$ denotes the constant assigned to the identified interval n,
$C_{n-1}$ denotes the constant assigned to the interval n-1 previous to the identified interval n,
$C_{n+1}$ denotes the constant assigned to the interval n+1 subsequent to the identified interval n, and
$C_{n+2}$ denotes the constant assigned to the interval n+2 subsequent to the identified interval n by two.

5. Method according to any one of the preceding claims, wherein for determining the interim value ($B^d_s$) representing the input interval value (s) to the power of d interim values representing interval values to the power of d-1 in the identified interval (n) up to the input interval value (s) are accumulated, and wherein for determining the interim value representing a given interval value to the power of d-1 interim values representing interval values to the power of m-2 in the identified interval (n) up to the given interval value are accumulated.

6. Method according to any one of the preceding claims, wherein the interim value ($B^d_s$) for at least one degree d out of degree values [1, 2, 3, 4] representing the input interval value (s) to the power of d is determined based on the corresponding equation out of:

$$^{c}B_{i}^{0} = 1, i = 0 \ldots k, k = s/\Delta$$

$$^{c}B_{s=k\Delta}^{1} = \left[ \frac{1}{\Delta} \sum_{i=0}^{k-1} {}^{c}B_{i\Delta}^{0} \right] \Delta^{2}$$

$$^{c}B_{s=k\Delta}^{2} = \left[ \frac{1}{\Delta} {}^{c}B_{s}^{1} + \frac{2}{\Delta} \sum_{i=0}^{k-1} {}^{c}B_{i\Delta}^{1} \right] \Delta^{2}$$

$$^{c}B_{s=k\Delta}^{3} = \left[ \frac{3}{2\Delta} {}^{c}B_{s}^{2} - \frac{1}{2\Delta} {}^{c}B_{s}^{1} + \frac{3}{\Delta} \sum_{i=0}^{k-1} {}^{c}B_{i\Delta}^{2} \right] \Delta^{2}$$

$$^{c}B_{s=k\Delta}^{4} = \left[ \frac{4}{2\Delta} {}^{c}B_{s}^{3} - \frac{2}{2} {}^{c}B_{s}^{2} + \frac{4}{\Delta} \sum_{i=0}^{k-1} {}^{c}B_{i\Delta}^{3} \right] \Delta^{2}$$

wherein

s denotes the input interval value,
$\Delta$ denotes the step increment size in the identified interval n,
k denotes the fraction of the input interval value s divided by the step increment size $\Delta$,
i denotes the fraction of an interval value $x_i$ divided by the step increment size $\Delta$,
$B_{i\Delta}^{d}$ denotes the interim value determined for the interval value $x_i$ to the power of d, and
$B_{s}^{d}$ denotes the interim value determined for the input interval value s to the power d.

7. Method according to any one of the preceding claims, wherein the interim value ($B_{s}^{d}$) for at least one degree d out of degree values [1, 2, 3, 4] representing the input interval value (s) to the power of d is determined based on the corresponding equation out of:

$$^{c}B_{i}^{0} = \Delta, i = 0 \ldots s$$

$$^{c}B_{s=k\Delta}^{1} = {}^{c}B_{(k-1)\Delta}^{1} + \Delta$$

$$^{c}B_{s=k\Delta}^{2} = ({}^{c}B_{k\Delta}^{1} + {}^{c}B_{(k-1)\Delta}^{1})\Delta + {}^{c}B_{(k-1)\Delta}^{2}$$

$$^{c}B_{s=k\Delta}^{3} = (2 *{}^{c}B_{k\Delta}^{2} + {}^{c}B_{(k-1)\Delta}^{2})\Delta - {}^{c}B_{k\Delta}^{1}\Delta^{2} + {}^{c}B_{(k-1)\Delta}^{3}$$

$$^{c}B_{s=k\Delta}^{4} = 2({}^{c}B_{k\Delta}^{3} + {}^{c}B_{(k-1)\Delta}^{3})\Delta - ({}^{c}B_{k\Delta}^{2} - {}^{c}B_{(k-1)\Delta}^{2})\Delta^{2} + {}^{c}B_{(k-1)\Delta}^{4}$$

wherein

s denotes the input interval value,
$\Delta$ denotes the step increment size in the identified interval n,
k denotes the fraction of the input interval value s divided by the step increment size $\Delta$,
$B^d_s$ denotes the interim value determined for the input interval value s to the power d.

8.  Method according to any one of the preceding claims,
    wherein the set of coefficients ($C^m_d$) and the interim values $B^d_s$ follow a condition of one of the following:

$$C \times {}^c B^d_s \ \texttt{with} \ {}^c B^0_i = 1, i = 0.......k, k = s/\Delta$$

or

$$\Delta 1 \times {}^c B^d_s \ \texttt{with} \ {}^c B^0_i = C, i = 0.......k, k = s/\Delta \ .$$

9.  Method according to any one of the preceding claims,
    wherein for determining an interim value ($B^d_s$) of degree d for the input interval value (s), at least one temporary interim value ($tB^d_s$) is determined for a modified step increment size exceeding a regular step increment size.

10. Method according to claim 9,

    a) wherein an interval value ($x_i$) associated with the modified step increment size is selected such that the selected interval value ($x_i$) is not more than the input interval value (s) and comes closest to the input interval value (s), and
    b) wherein a temporary interim value ($tB^d_s$) is determined for the selected interval value ($x_i$), the corresponding degree d, and the modified step increment size which temporary interim value ($tB^d_s$) represents the interim value ($B^d_s$) to be determined in case the selected interval value ($x_i$) is equal to the input interval value (s),
    c) wherein the modified step increment size is reduced in case the previously selected interval value ($x_i$) is not equal to the input interval value (s), and
    d) wherein the steps a) to c) are applied to the reduced step increment size and any further reduced step increment size until the selected interval value ($x_i$) is equal to the input interval value (s).

11. Method according to any one of the preceding claims,
    wherein the characteristic (Q(x)) represents a compensation function for compensating a non-linear transfer function (x(Q)) of a sensor (1) and
    wherein the input value (x) is received from the sensor (1).

12. Computer program element comprising computer program code means for implementing a method according to any one of the preceding claims when being executed on a processing unit.

13. Approximation unit (21) for determining an output value ($S^m_n$) in response to an input value (x=S) supplied by a sensor (1) which output value ($S^m_n$) represents an approximation to a value of a characteristic (Q(x)), comprising
    an interval identifier (211) for identifying an interval (n) out of several intervals into which a range of input values (x) is divided, the identified interval (n) being the interval the received input value (x) is associated with,
    an input value mapper (213) for mapping the received input value (S) into an interval value ($x_i$=s), wherein each interval comprises a set of interval values ($x_i$) representing possible discrete input values in and relative to such interval,
    a coefficient calculator (212) for determining a set of coefficients ($C^m_d$) for the identified interval (n) based on a set of constants ($C_{n+/-k}$) selected from a multitude of constants each constant ($C_{n+/-k}$) being assigned to one of the intervals and representing a constant value for being integrated m times resulting in a base spline ($B^m$) of degree m, an approximation to the characteristic (Q(x)) being formed by accumulating all the base spline ($B^m$) into a spline ($S^m$) of degree m, and the determined set of coefficients ($C^m_d$) forming a polynomial in combination with the interval value ($x_i$) as a variable of degree m and less which polynomial represents the spline ($S^m$) in the identified interval (n), and
    an accumulation unit (214) adapted for determining for each expression of the input interval value (s) to the power of m or less an interim value ($B^d_s$) based on an interim value determined for a lower interval value and/or a lower degree, and adapted for determining the output value ($S^m_n$) based on the interim values ($B^d_s$) and the coefficients ($C^m_d$).

**14.** Approximation unit according to claim 13, wherein the accumulation unit (214) comprises at least $\sum m$ counters for determining the interim values ($B^d_s$).

**15.** Sensor system comprising,
a sensor (1), and
an approximation unit (12) according to claim 12 or claim 13, the approximation unit (12) receiving a sensor signal value as input value (S).

FIG. 1

FIG. 2

FIG. 3

FIG. 4

FIG. 5

FIG. 6

FIG. 7

FIG. 8

FIG. 9

| s | $B_s^0$ | $B_s^1$ | $B_s^2$ | $B_s^3$ | $^cB_s^0$ | $^cB_s^1$ | $^cB_s^2$ | $^cB_s^3$ |
|---|---|---|---|---|---|---|---|---|
| 0 | 0 | 0 | 0 | 0 | 1 | 0 | 0 | 0 |
| 1 | 1 | 1 | 1 | 1 | 1 | 1 | 1 | 1 |
| 2 | 1 | 2 | 3 | 4 | 1 | 2 | 4 | 8 |
| 3 | 1 | 3 | 6 | 10 | 1 | 3 | 9 | 27 |
| 4 | 1 | 4 | 10 | 20 | 1 | 4 | 16 | 64 |

FIG. 10

FIG. 11

FIG. 12

FIG. 13

| $s$ | $^cB_n^0$ | $^cB_n^1$ | $^cB_n^2$ | $^cB_n^3$ | $^cB_n^1$ | $^cB_n^2$ | $^cB_n^3$ | $^cB_n^1$ | $^cB_n^2$ | $^cB_n^3$ | $^cB_n^1$ | $^cB_n^2$ | $^cB_n^3$ | $^cB_n^1$ | $^cB_n^2$ | $^cB_n^3$ |
|---|---|---|---|---|---|---|---|---|---|---|---|---|---|---|---|---|
| | $\Delta=1$ | | | | $\Delta=2$ | | | $\Delta=4$ | | | $\Delta=8$ | | | $\Delta=16$ | | |
| 0 | 0 | 0 | 0 | 0 | 0 | 0 | 0 | 0 | 0 | 0 | 0 | 0 | 0 | 0 | 0 | 0 |
| 1 | 1 | 1 | 1 | 1 | | | | | | | | | | | | |
| 2 | 1 | 2 | 4 | 8 | 2 | 4 | 8 | | | | | | | | | |
| 3 | 1 | 3 | 9 | 27 | | | | | | | | | | | | |
| 4 | 1 | 4 | 16 | 64 | 4 | 16 | 64 | 4 | 16 | 64 | | | | | | |
| 5 | 1 | 5 | 25 | 125 | | | | | | | | | | | | |
| 6 | 1 | 6 | 36 | 216 | 6 | 36 | 216 | | | | | | | | | |
| 7 | 1 | 7 | 49 | 343 | | | | | | | | | | | | |
| 8 | 1 | 8 | 64 | 512 | 8 | 64 | 512 | 8 | 64 | 512 | 8 | 64 | 512 | | | |
| 9 | 1 | 9 | 81 | 729 | | | | | | | | | | | | |
| 10 | 1 | 10 | 100 | 1000 | 10 | 100 | 1000 | | | | | | | | | |
| 11 | 1 | 11 | 121 | 1331 | | | | | | | | | | | | |
| 12 | 1 | 12 | 144 | 1728 | 12 | 144 | 1728 | 12 | 144 | 1728 | | | | | | |
| 13 | 1 | 13 | 169 | 2197 | | | | | | | | | | | | |
| 14 | 1 | 14 | 196 | 2744 | 14 | 196 | 2744 | | | | | | | | | |
| 15 | 1 | 15 | 225 | 3375 | | | | | | | | | | | | |
| 16 | 1 | 16 | 256 | 4096 | 16 | 256 | 4096 | 16 | 256 | 4096 | 16 | 256 | 4096 | 16 | 256 | 4096 |
| 17 | 1 | 17 | 289 | 4913 | | | | | | | | | | | | |
| 18 | 1 | 18 | 324 | 5832 | 18 | 324 | 5832 | | | | | | | | | |
| 19 | 1 | 19 | 361 | 6859 | | | | | | | | | | | | |
| 20 | 1 | 20 | 400 | 8000 | 20 | 400 | 8000 | 20 | 400 | 8000 | | | | | | |
| 21 | 1 | 21 | 441 | 9261 | | | | | | | | | | | | |
| 22 | 1 | 22 | 484 | 10648 | 22 | 484 | 10648 | | | | | | | | | |
| 23 | 1 | 23 | 529 | 12167 | | | | | | | | | | | | |
| 24 | 1 | 24 | 576 | 13824 | 24 | 576 | 13824 | 24 | 576 | 13824 | 24 | 576 | 13824 | | | |
| 25 | 1 | 25 | 625 | 15625 | | | | | | | | | | | | |
| 26 | 1 | 26 | 676 | 17576 | 26 | 676 | 17576 | | | | | | | | | |
| 27 | 1 | 27 | 729 | 19683 | | | | | | | | | | | | |
| 28 | 1 | 28 | 784 | 21952 | 28 | 784 | 21952 | 28 | 784 | 21952 | | | | | | |
| 29 | 1 | 29 | 841 | 24389 | | | | | | | | | | | | |
| 30 | 1 | 30 | 900 | 27000 | 30 | 900 | 27000 | | | | | | | | | |
| 31 | 1 | 31 | 961 | 29791 | | | | | | | | | | | | |

FIG. 14

Europäisches
Patentamt

European
Patent Office

Office européen
des brevets

# EUROPEAN SEARCH REPORT

**Application Number**

EP 11 00 0527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Chapter 3: Calibration and Linearization Techniques" In: van der Horn G, Huijsing J: "Integrated Smart Sensors", 1998, Springer Verlag, XP008150261, * section 3.2, in particular 3.2.4 and 3.2.7 * | 1-15 | INV. G06F17/17 G01F1/696 |
| A | DIAS PEREIRA J M ET AL: "PDF-based progressive polynomial calibration method for smart sensors linearization", IEEE TRANSACTIONS ON INSTRUMENTATION AND MEASUREMENT, vol. 58, no. 9, September 2009 (2009-09), pages 3245-3252, XP011271535, ISSN: 0018-9456, DOI: 10.1109/TIM.2009.2022360 * section I * | 1-15 | |
| A | DIAS PEREIRA J M ET AL: "Fitting transducer characteristics to measured data", IEEE INSTRUMENTATION & MEASUREMENT MAGAZINE, vol. 4, no. 4, December 2001 (2001-12), pages 26-39, XP011092035, ISSN: 1094-6969, DOI: 10.1109/5289.975463 * section "Splines" from page 30 to 32 * | 1-15 | TECHNICAL FIELDS SEARCHED (IPC) G06F G01F |
| A | PASIC A ET AL: "Linearising calibration methods for a generic embedded sensor interface (GESI)", 1ST INTERNATIONAL CONFERENCE ON SENSING TECHNOLOGY, 21-23 NOVEMBER 2005, PALMERSTON NORTH, NEW ZEALAND, 2005, pages 185-190, XP55023293, * sections 1, 2.1, 2.2; figure 1 * | 1-15 | |

-/--

The present search report has been drawn up for all claims

| Place of search | Date of completion of the search | Examiner |
|---|---|---|
| Berlin | 29 March 2012 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 11 00 0527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | de Boor C: "Spline Toolbox for use with MATLAB - User Guide Version 3.2.2", , September 2005 (2005-09), XP55023294, Retrieved from the Internet: URL:http://users.isr.ist.utl.pt/~jmrs/teaching/papers/mathworks/splines.pdf [retrieved on 2012-03-28] * page 2-16: "ppform", "B-form" * * pages 3-28, 3-29 * | 1-15 | |
| A | MITRA A ET AL: "Evaluating sinusoidal functions by a low complexity cubic spline interpolator with error optimization", INTERNATIONAL JOURNAL OF ELECTRICAL AND COMPUTER ENGINEERING, vol. 2, no. 2, 2007, pages 110-117, XP55022870, * section V; tables I, II; figures 5, 6 * | 1-15 | |
| A | SAMADI S ET AL: "Multiplier-free structures for exact generation of natural powers of integers", PROCEEDINGS OF THE 2005 IEEE INTERNATIONAL SYMPOSIUM ON CIRCUITS AND SYSTEMS (ISCAS 2005), 23-26 MAY 2005, KOBE, JAPAN, 23 May 2005 (2005-05-23), pages 1146-1149, XP010815761, DOI: 10.1109/ISCAS.2005.1464796 ISBN: 978-0-7803-8834-5 * sections I and III * | 1-15 | TECHNICAL FIELDS SEARCHED (IPC) |
| A | WO 01/04582 A1 (MILLIPORE CORP [US]) 18 January 2001 (2001-01-18) * abstract * * page 16, line 18 - page 17, line 15 * * claims 1-3 * | 1-15 | |

-/--

The present search report has been drawn up for all claims

| Place of search | Date of completion of the search | Examiner |
|---|---|---|
| Berlin | 29 March 2012 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

Application Number

EP 11 00 0527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/116862 A2 (IMAGINATION TECH LTD [GB]; FENNEY SIMON [GB]) 8 December 2005 (2005-12-08) * abstract; figure 3 * * page 9, lines 1-29 * ----- | 1-15 | |

TECHNICAL FIELDS
SEARCHED (IPC)

The present search report has been drawn up for all claims

| Place of search | Date of completion of the search | Examiner |
|---|---|---|
| Berlin | 29 March 2012 | Domingo Vecchioni, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 00 0527

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2012

| Patent document cited in search report | | Publication date | Patent family member(s) | | Publication date |
|---|---|---|---|---|---|
| WO 0104582 | A1 | 18-01-2001 | AU | 6405600 A | 30-01-2001 |
| | | | CN | 1371467 A | 25-09-2002 |
| | | | EP | 1192424 A1 | 03-04-2002 |
| | | | JP | 2003504613 A | 04-02-2003 |
| | | | TW | 436672 B | 28-05-2001 |
| | | | US | 6449571 B1 | 10-09-2002 |
| | | | WO | 0104582 A1 | 18-01-2001 |
| WO 2005116862 | A2 | 08-12-2005 | EP | 1754168 A2 | 21-02-2007 |
| | | | GB | 2414578 A | 30-11-2005 |
| | | | JP | 2008500623 A | 10-01-2008 |
| | | | US | 2005283516 A1 | 22-12-2005 |
| | | | WO | 2005116862 A2 | 08-12-2005 |

EPO FORM P0459

For more details about this annex : see Official Journal of the European Patent Office, No. 12/82